# EUROPEAN PATENT APPLICATION

(11) **EP 4 742 504 A1**
(43) Date of publication of application: **13.05.2026**
(21) Application number: 25214898.6
(22) Date of filing: 11.11.2025
(51) Int. Cl.: H02K 1/32, H02K 1/278, H02K 9/197, H02K 1/30

(54) **ELECTRIC MACHINE ROTOR, IN PARTICULAR FOR A SYNCHRONOUS MOTOR FOR TRACTION OF MOTOR VEHICLES**

(30) Priority: 11.11.2024 IT 202400025269
(71) Applicant: FERRARI S.p.A., 41100 Modena (IT)
(72) Inventor: DE BENEDITTIS, Giacomo, 41100 MODENA (IT); CATALDI, Matteo, 41100 MODENA (IT); DELLA FORNACE, Enrico, 41100 MODENA (IT); PELLONI, Simone, 41100 MODENA (IT)
(74) Representative: Studio Torta S.p.A.

(57) **Abstract**

An electric machine rotor (1), in particular for an electric motor for traction of motor vehicles, has two shaft portions (4,5) opposite one another and supported by respective bearings; one of said shaft portions (4) defines an inlet (7) and an outlet (8) for a heat exchange liquid, for cooling an annular wall (10) supporting a plurality of permanent magnets (13), and radially delimits an inner cavity (23) engaged by a core (24); the latter has an axial hole (45) communicating with the inlet (7) to supply a plurality of heat exchange channels (28) through delivery junction channels (44), which are separate from one another and are configured so as to divert the liquid into a radial direction; the liquid is then diverted into an axial direction towards the outlet (8) by return junction channels (38), which are also separate from one another; the delivery junction channels (44) and/or the return junction channels (38) are defined by two surfaces (43,42; 35,36), which axially face one another and define part of the core (24) and of a body distinct from the core (24), respectively.

## Description

### Cross-reference to related applications

This patent application claims priority from Italian patent application no. 102024000025269 filed on November 11, 2024, the entire disclosure of which is incorporated herein by reference.

### Technical field

The invention relates to an electric machine rotor. In particular, the disclosure refers to electric machines defined by motors for traction of motor vehicles, without for this reason lacking generality.

### Background

For traction of motor vehicles, synchronous electric motors are generally used, namely electric motors with permanent magnets. In particular, brushless motors can be used, wherein the permanent magnets are fixed on a support wall, which is part of the rotor, while the stator includes the windings that are electrically powered to generate the rotating magnetic field, which, in turn, will cause the rotation of the magnets and, therefore, of the entire rotor.

Some electric motors are cooled by means of liquid heat exchange systems, for example with channels made in the stator. Applications regarding the traction of motor vehicles are relatively severe from the point of view of heating, both in terms of the heat generated by the electric current in the windings of the stator and in terms of the heat generated by eddy currents in the rotor, in the area of the permanent magnets and the of surface that supports them. Therefore, in order to prevent the heating from reaching levels that can compromise the efficiency of the motor, or even the operation thereof, the rotor - and not only the stator - needs to be cooled.

To this aim, the rotor has a shaft, which extends along the rotation axis and must be provided with inner axial channels, communicating with an inlet and with an outlet for introducing and extracting the heat exchange liquid while the rotor rotates.

In addition, in order to cool the radially outermost areas of the rotor, namely the permanent magnets and the wall that supports them, the heat exchange liquid must be diverted radially outwards, with respect to such axial channels.

To this regard, it is appropriate to divide the overall radial flow into several channels or sectors, which are separate from one another and each have a relatively limited width in the circumferential direction, in order to avoid, or at least limit, fluid dynamic losses due to turbulence that may form because of Coriolis accelerations.

At the same time, localized fluid dynamic losses should be limited when the liquid flow is diverted into the radial channels, starting from the rotor shaft, so as to consequently reduce the consumption and the size of the pump that supplies the heat exchange liquid.

A possible cause generating localized losses is represented by the fact that the liquid in the radial channels also has a rotation component (due to the rotation of the rotor about its axis during operation), while in the rotor shaft the liquid flow is essentially axial, assuming that it is channelled into one single central supply channel, namely along the rotation axis. In these conditions, the flow is subjected to a sudden change in the motion conditions, when it enters the radial channels, with consequent fluid dynamic losses. In order to overcome this drawback, it is appropriate to divide the liquid flow in the rotor shaft into several axial channels, which are separate from one another, so that it already has a component of rotary motion inside the rotor shaft.

Patent application US 2015/288255 A1 corresponds to the preamble of claim 1 and discloses solutions of this type, with a plurality of axial supply channels and with a plurality of return channels inside the rotor shaft.

A further cause generating localized losses is defined by the sudden change in direction, when the liquid is diverted from the rotor shaft into the radial channels. To this regard, in document US 2015/288255 A1, the axial channels end in the area of respective holes, which are made in the rotor shaft by machining by machine tools, in substantially radial directions. Therefore, the liquid flows in the rotor shaft are subjected to an abrupt change in direction, at a right angle, when they enter such holes. The same configuration also occurs when the liquid flows radially flow back into the rotor shaft.

As mentioned above, these sudden changes in direction cause localized fluid dynamic losses, which should be avoided. In other words, compared to US 2015/288255 A1, there is a need to join the axial channels to the radial channels by means of relatively wide bending radii, so that the change in direction is less abrupt.

In addition to reducing fluid dynamic losses, other objects need to be achieved, compared to known solutions, for example: producing and/or assembling the rotor through operations that are relatively simple and economic and in a relatively short time; making the design of the rotor components more versatile; improving the characteristics that allow the channels to be separated from one another in the circumferential direction; maximizing the heat exchange with the rotor components; improving the configuration of the inlet and outlet for the liquid on the rotor shaft (in particular, so as to improve the seal with respect to the fixed parts of the heat exchange system); reducing the overall weight of the rotor and, therefore, increasing the power/weight ratio of the electric motor.

Therefore, the object of the invention is to provide an electric machine rotor, in particular for a synchronous electric motor for traction of motor vehicles, which fulfils the needs discussed above in a simple and economic fashion.

### Summary

According to the invention, there is provided an electric machine rotor, in particular for a synchronous electric motor for traction of motor vehicles, as claimed in claim 1.

The dependent claims define special embodiments of the invention.

### Brief description of the drawings

The invention will be best understood upon perusal of the following detailed description of some embodiments thereof, by mere way of non-limiting example, with reference to the accompanying drawings, in which:
- figure 1 shows, in a sectional view according to a meridian section plane, a preferred embodiment of the electric machine rotor, in particular for a synchronous electric motor for traction of motor vehicles, according to the invention;
- figures 2 and 3 are perspectives of a component of the rotor of figure 1, from two different points of view;
- figure 4 shows, in a perspective view and on a larger scale, another component of the rotor of figure 1;
- figures 5 to 8 show, in a cross section, the sealed coupling of the component of figures 2 and 3 in a cavity of the rotor, according to different embodiments;
- figure 9 is an enlargement of a detail of figure 2; and
- figure 10 shows, in a perspective view and on a larger scale, an interface element of the rotor of figure 1.

### Description of preferred embodiments

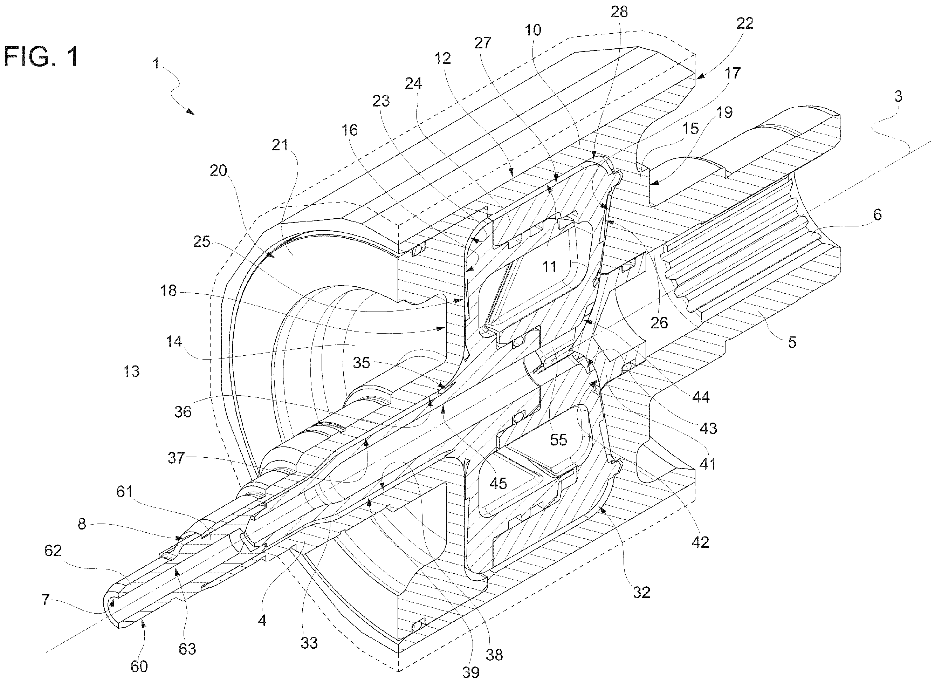

In figure 1, reference number 1 indicates an electric machine rotor, in particular for a synchronous electric motor for traction of motor vehicles.

The rotor 1 extends along an axis 3 and comprises two shaft portions 4 and 5, at opposite axial ends. In use, the shaft portions 4 and 5 are supported by respective bearings, which are not shown herein, to allow the rotor 1 to rotate about the axis 3 with respect to a fixed stator, which is also not shown herein.

The shaft portions 4 and 5 are axially hollow: the inner cavity of the shaft portion 5 has an end zone 6, which is grooved to perform a coupling function and to transfer the rotary motion; the shaft portion 4, on the other hand, is associated with an inlet 7 and an outlet 8 for the transfer of a heat exchange liquid. The shaft portions 4 and 5 are preferably made of a metal material.

The rotor 1 further comprises an annular support wall 10, which is coaxial to the shaft portions 4 and 5, is preferably made of a metal material and is radially delimited by an inner surface 11 and by an outer surface 12. The latter carries a plurality of permanent magnets 13 (shown as a whole by a dotted line, in a schematic manner), fixed to the wall 10 in a known manner that is not described in detail.

The shaft portions 4 and 5 axially project from respective flanges 14 and 15, which are radially interposed between the wall 10 and the shaft portions 4 and 5. The flanges 14 and 15 are axially delimited by respective faces 16 and 17, facing one another, namely towards the inside of the rotor 1, and by respective faces 18 and 19, facing outwards and, therefore, opposite the faces 16 and 17.

The flanges 14 and 15 are preferably made of a metal material. More preferably, the flange 14 forms one single body 20 together with the shaft portion 4 and ends, radially outwards, with an annular portion 21, which is coupled in a fluid-tight manner to an axial end of the wall 10, for example by means of at least one sealing ring.

The flange 15 preferably forms one single body 22 with the shaft portion 5 and the wall 10.

In general, the shaft portions 4 and 5, the flanges 14 and 15 and/or the wall 10 could have configurations and/or structures different from the ones shown herein (by way of example, the opposite axial ends of the wall 10 could be fitted around respective collars, which axially protrude, one towards the other, from the outer annular edges of the flanges 14 and 15).

The rotor 1 has an inner cavity 23, which is radially defined by the surface 11, is axially defined by the faces 16 and 17 and is engaged by a core 24, which is therefore axially arranged between the shaft portions 4 and 5. The core 23 has two faces 25 and 26, axially opposite one another, and a radially outer surface 27, joined to the faces 25 and 26: the face 25, the surface 27 and the face 26 of the core 23 are coupled to the face 16, to the surface 11 and to the face 17, respectively, and, together with the latter (the face 16, the surface 11 and the face 17), define a plurality of heat exchange channels 28, which are separate from one another in a circumferential direction, to remove heat from the wall 10 and/or from the permanent magnets 13 during use.

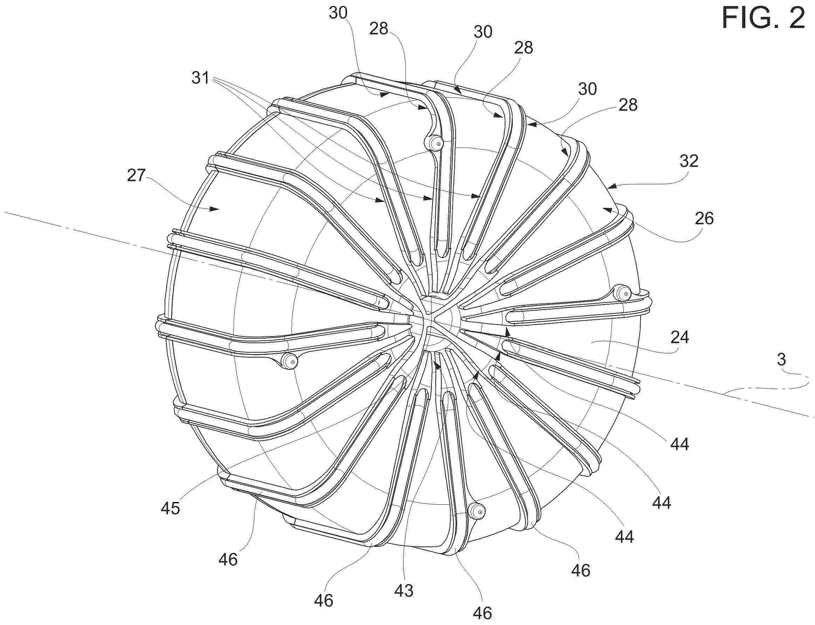

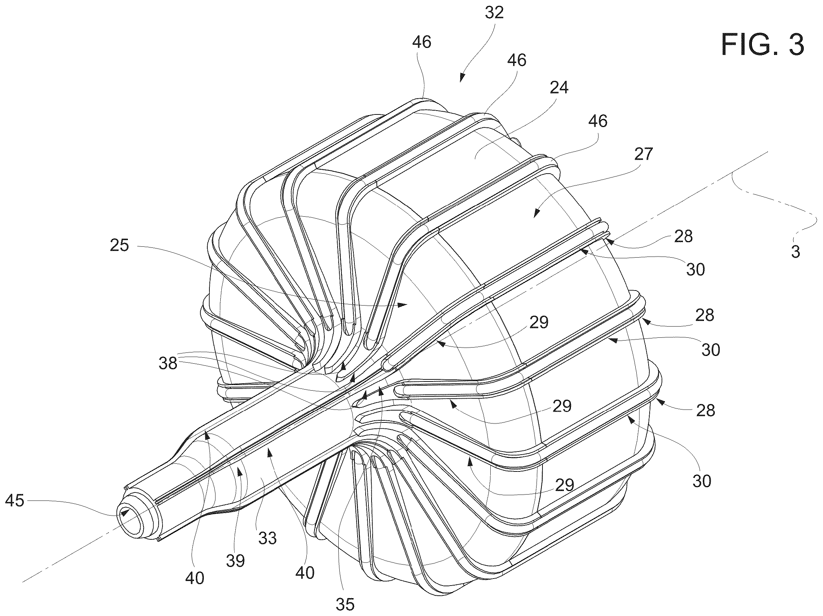

With reference to figures 2 and 3, which show the core 24, the channels 28 are equally distributed around the axis 3. Each channel 28 preferably comprises three segments filleted to one another, namely a return segment 29 (figure 3), between the faces 25 and 16, an intermediate segment 30, between the surfaces 27 and 11, and a delivery segment 31 (figure 2) between the faces 26 and 17.

With reference to figure 1 again, the core 24 is axially inserted into the cavity 23 during the assembly of the rotor 1 and defines part of an insert 32, which is coaxial to the shaft portions 4 and 5 and ends with a shank 33, which axially projects with respect to the core 24. In the preferred embodiment shown herein, the insert 32 consists of several pieces fixed to one another, but it could also possibly be defined by one single piece.

The shank 33 is housed in the shaft portion 4 and has an outer surface joined to the face 25 by means of a surface 35 having a curved profile (if sectioned by means of a section plane on which the axis 3 lies). The surface 35 axially faces and is coupled to a surface 36, which joins the face 16 of the flange 14 to an inner surface 37 of the shaft portion 4 and has a curved profile complementary to the one of the surface 35. The surfaces 35 and 36 define a plurality of junction channels 38 between them, which radiate out from the axis 3 and are separate from one another in a circumferential direction. In particular, each channel 38 is the extension of a respective segment 29 of the channels 28, without interruptions (figure 3).

On the opposite side with respect to the core 24, the channels 38 communicate with the outlet 8 through a gap 39, radially between the inner surface 37 of the shaft portion 4 and the outer surface of the shank 33. In particular, with reference to figure 3, the gap 39 is divided, along a circumferential direction, into a plurality of return channels 40, which are substantially parallel to the axis 3 and can be fewer in number than the channels 38.

According to the preferred embodiment shown in figure 1, the rotor 1 further comprises an insert 41, which is coaxial to the insert 32 and is at least partially housed in the shaft portion 5. The insert 41 is preferably coupled in a fluid-tight manner to an inner cylindrical surface of the shaft portion 5 (for example, by means of a sealing ring) so as to perform a plug function axially separating the cavity 23 from the end zone 6.

Towards the core 24, the insert 41 axially ends with a surface 42, which has a curved profile (if sectioned by any section plane on which the axis 3 lies); the insert 41 axially faces, and is coupled to, a radially inner zone 43 of the face 26, with a curved profile complementary to the one of the surface 42. The surface 42 and the zone 43 of the face 26 define a plurality of junction channels 44 between them, which radiate out from the axis 3 and are separate from one another along the circumferential direction, as shown in figure 2. More in particular, each channel 44 is the extension of a respective segment 31 of the channels 28, without interruptions.

The channels 44 establish a communication between the channels 28 and at least one supply hole 45, which extends as a through hole in the insert 32 along an axial direction. In particular, the hole 45 is made centrally, namely along the axis 3. According to figure 1, the hole 45 communicates with the inlet 7, whereby it supplies the heat exchange liquid to the channels 44.

Thanks to the aforementioned curved profile, the channels 44 divert the liquid flow into a radial direction and in a progressive manner, namely with relatively large bending radii, calibrated during the design phase so as to minimize localized fluid dynamic losses when flowing out of the hole 45. Similarly, the channels 38 described above also define a progressive deflection of the flow, in an axial direction (starting from the segments 29 of the channels 28).

As explained above, the channels 44 are defined by two different components (namely, by the inserts 32 and 41, in the case shown herein), which face and are axially coupled to one another: in this way, it is easier to form the curved profile of the channels 44 during the manufacturing stages, compared to the prior art. The same principle is also found in the curved profile of the channels 38, which are defined by axially coupling two distinct components, namely the insert 32 and the body 20, so as to divert the flow into an axial direction.

Preferably, the insert 32 is made of a plastic material or of a fibre-reinforced plastic material (namely, a composite material). More preferably, the insert 41 is also made of a plastic material or of a fibre-reinforced plastic material. Thanks to the plastic material, it is possible to obtain relatively complex profiles for the channels 44 and, at the same time, contain the overall weight of the rotor 1. The insert 32 and/or the insert 41 are preferably manufactured by means of moulding techniques. For example, if they are made of a plastic or composite material, they are manufactured by means of injection moulding. In any case, other forming techniques can be adopted, for example 3D printing, namely additive manufacturing techniques. Also thanks to these forming techniques, it is possible to contain manufacturing costs and, at the same time, form relatively complex profiles for the channels 44, without additional machining.

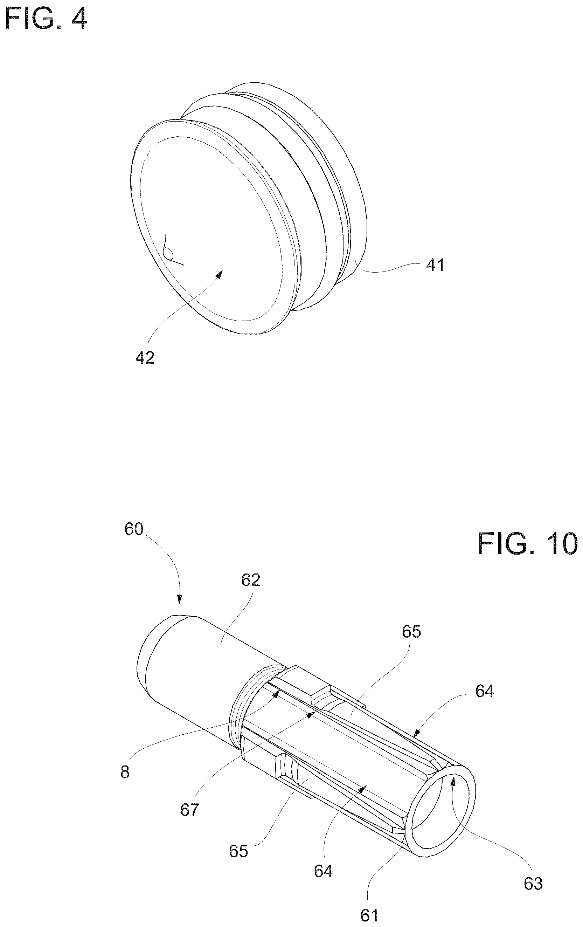

As shown in figures 2 and 3, the separation of the channels 28, 38 and 44 in a circumferential direction is defined by a plurality of ribs 46, which preferably are exclusively located on the insert 32. In other words, the outer surface of the insert 32 (which includes the faces 25 and 26 and the surfaces 27 and 35) is shaped so as to define the ribs 46, while the inner surfaces of the bodies 20 and 22 and the surface 42 of the insert 41, in addition to having an axially symmetrical shape, are preferably smooth (namely, without ribs, steps, fins or projections) and are coupled to the ribs 46 so as to isolate the channels from one another in a circumferential direction. By way of example, figure 4 shows a perspective view of the surface 42 of the insert 41, which axially ends with a tip or apex (at the centre of the hole 45).

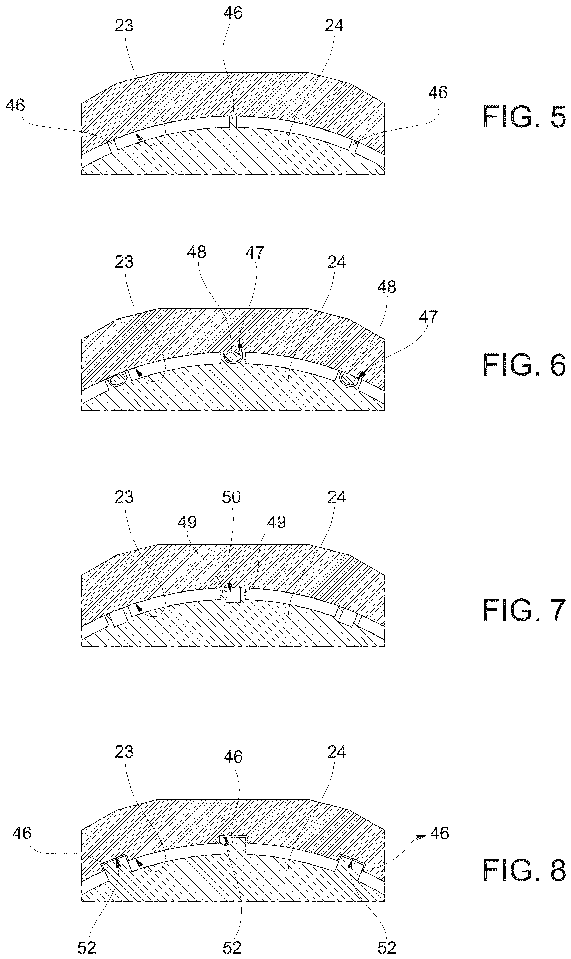

Several techniques can be adopted to ensure fluid tightness in a circumferential direction. In the embodiment of figure 5, for example, the core 24 is mounted in the cavity 23 so as to have an interference coupling of the ribs 46 (for example, with deformation of the plastic material). In the embodiment of figure 6, each rib is shaped so as to define a recess 47, which accommodates a respective bead 48, which is elastically deformable to ensure a seal due to its compression. In the embodiment of figure 7, each rib consists of two fins 49, facing one another in a circumferential direction so as to be separated by a recess 50 and having a height such as to leave a radial clearance: in use, the heat exchange liquid fills the recess 50, thanks to the aforementioned radial clearance, but forms, in the recess 50, turbulent motions forming a fluid dynamic barrier against leakage between the channels in a circumferential direction. In the embodiment of figure 8, finally, the end of each rib 46 engages a respective groove so as to form a labyrinth passage 52, which, also in this case, defines a fluid-dynamic barrier against leakage between channels in a circumferential direction.

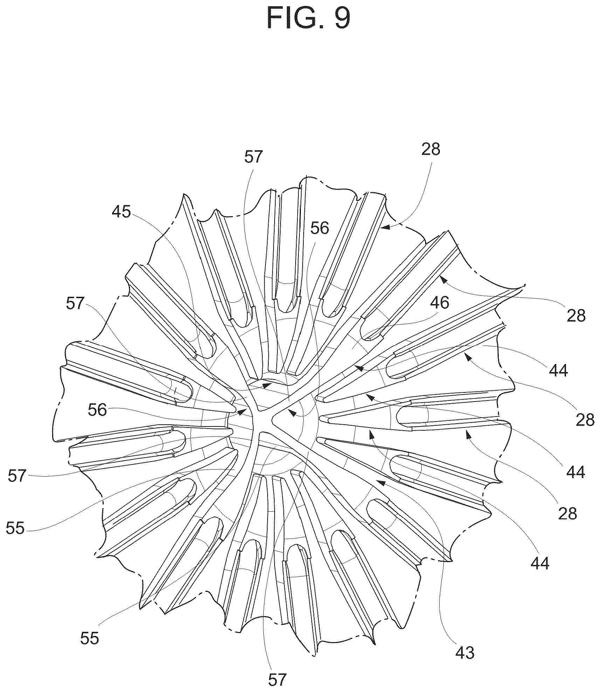

With reference to the enlarged perspective of figure 9, at the axial end where the channels 44 begin, the hole 45 is engaged by fins 55 so as to be split, in a circumferential direction, into a plurality of channels 56, which are parallel to one another. In particular, the channels 56 are straight and parallel to the axis 3. The number of the channels 56 (e.g. four) can be smaller than the number of the channels 44. The fins 55 preferably constitute part of the core 24 and/or each define an extension of a respective rib 46 of the face 26, without interruptions.

The fins 55 axially end with a curved edge 57, which has a profile complementary to the one of the surface 42 and is coupled, in a sealed manner, against the surface 42 at the tip or apex of the insert 41. For example, with reference to figure 1, the separation into several channels 56 axially occupies about 15-20% of the hole 45 (according to variants that are not shown herein, the division into the channels 56 could be adopted for a greater length, possibly even for the entire length of the hole 45 in the insert 32). In use, the fins 55 begin to cause the rotation of the heat exchange liquid around the axis 3, during the rotation of the rotor 1, before the flow is diverted into a radial direction by the channels 44, so as to reduce localized fluid dynamic losses (due to the presence of a rotary motion field in the channels 44).

At the opposite axial end, the rotor 1 preferably comprises an interface element 60 having an inner portion 61 and an outer portion 62, with respect to the shaft portion 4, and provided with a through hole 63, which is coaxial to the hole 45 and defines the inlet 7.

In particular, the inner portion 61 axially ends with a circular mouth, which is radially arranged between the axial end of the shank 33 and the inner surface 37 of the shaft portion 4.

With reference to figure 10, the inner portion 61 is coaxial to the shaft portion 4 and has an outer surface 64 provided with a plurality of radial fins or projections 65, which are coupled to the inner surface 37 in a fixed position, for example by means of interference fitting. Each projection 65 has a respective axial extension on the outer portion 62 and said extensions have a greater radial height so as to define an abutment, which is arranged so as to axially strike against the axial end of the shaft portion 4.

The outer surface 64, the projections 65 and the inner surface 37 define a plurality of channels 67, which are distributed around the axis 3 and, at one end, communicate with the channels 40 and, at the opposite end, define the outlet 8.

Owing to the characteristics described above, the advantages brought by the rotor 1 should be evident.

In particular, as explained above in detail, the configuration of the channels 38 and 44 makes it possible to relatively easily form a curved profile, with relatively large bending radii, so as to reduce localized fluid dynamic losses when the liquid is diverted into an axial direction and into a radial direction, respectively.

By reducing fluid dynamic losses, the cooling efficiency is consequently improved. The pump used to supply the heat exchange liquid to the inlet 7 can be chosen so as to have a reduced flow rate and, therefore, a reduced power, with the same heat removed from the rotor 1; or, with the same flow rate of heat exchange liquid, a greater heat removal is achieved.

Furthermore, the design and production are relatively simple, as the structure described above with reference to the accompanying drawings is relatively close to the configurations that are already known for manufacturing hollow shaft rotors without cooling. Starting from these known solutions, namely from a configuration that, in practice, is standard, the inserts 32 and 41 are simply added, without having to design the wall 10 with the magnets 13 and/or the shaft portions 4 and 5 and/or the flanges 14 and 15 in a dedicated manner, unlike known solutions requiring a new design for all the components.

Furthermore, the configuration with the inserts 32 and 41 allows the rotor 1 to be assembled in a relatively simple manner. To this regard, for the assembly, the insert 41 is first inserted through the cavity 23 of the body 22, so as to place the insert 41 in its seat in the shaft portion 5. Subsequently, the core 24 is inserted into the cavity 23, so that it can be coupled against the face 17 of the flange 15 and against the surface 42 of the insert 41; after this insertion, in particular, the shank 33 remains protruding. Finally, the cavity 23 is axially closed by axially mounting the body 20. In particular, during this axial assembly, the shaft portion 4 of the body 20 is fitted on the shank 33; at the same time, the flange 14 is coupled, with the surface 36, axially against the core 23 and the flange 14 is coupled to the wall 10 in a sealed manner.

The interface element 60 can be coupled to the shaft portion 4 before or after the axial installation of the body 20.

Moreover, the rotor 1 has an extremely small number of components. At the same time, thanks to the plastic materials used for the inserts 32 and 41, it has a relatively low weight, which leads to a relatively high power/weight ratio.

Further advantages are evident for a person skilled in the art based on the features described above and/or based on the features indicated in the appended claims.

Finally, owing to the above, it is evident that the rotor 1 as described above can be subjected to changes and variants, without going beyond the scope of protection set forth in the appended claims.

In particular, the number and configuration of the channels 28 could be different from what is shown by way of example, always designed to cool the wall 10 and/or the permanent magnets 13.

Furthermore, the insert 41 could possibly be absent as a body of its own and it could be defined by a portion integrated in the shaft portion 5 (and/or in the body 22); on the other hand, the surface 36 defining the channels 38 could be defined by a further insert, for example made of a plastic material like the insert 41, instead of being defined by the metal material of the body 20.

Furthermore, the interface element 60 could manufactured as one single piece together with the body 20.

Finally, at least some of the channels 28, 44, 38, 40, 56 could have a winding angle about the axis 3, to facilitate, for example, a rotation of the heat exchange liquid during the axial and/or radial flow.

## Claims

1. Electric machine rotor (1), in particular for an electric motor for traction of motor vehicles, the electric machine rotor (1) extending along a longitudinal axis (3) and comprising:
- a first and a second shaft portion (4,5), which are axially opposite to each other and are suitable to be supported, in use, by respective bearings to rotate about said longitudinal axis (3);
- an inlet (7) and an outlet (8) for a heat transfer liquid, at said first shaft portion (4);
- an annular wall (10) which is coaxial to said shaft portions (4,5) and supports a plurality of permanent magnets (13);
- an inner cavity (23) radially bounded by said annular wall (10);
- a core (24) housed in said inner cavity (23) and having:
a) at least one supply hole (45) extending along said longitudinal axis (3) and communicating with said inlet (7);
b) a plurality of heat exchange channels (28) for cooling said annular wall (10) and/or said permanent magnets (13);
- delivery junction channels (44), which are separate from each other, provide communication between said supply hole (45) and said heat exchange channels (28), and are configured to divert the heat transfer liquid into a radial direction;
- return junction channels (38) which are separate from each other, provide communication between said heat exchange channels (28) and said outlet (8), and are configured to divert the heat exchange liquid into an axial direction;
wherein
- said delivery junction channels (44) are defined by a first and a second surface (43,42) axially facing each other and defining respectively part of said core (24) and of a first body distinct from said core (24), and/or
- said return junction channels (38) are defined by a third and a fourth surface (35,36) axially facing each other and defining respectively part of said core (24) and of a second body (20) distinct from said core (24).

2. The electric machine rotor according to claim 1, wherein
- the second surface (42) of said first body is smooth, and the first surface (43) of said core (24) is provided with ribs (46), which separate said delivery junction channels (44) from each other in a circumferential direction; and/or
- the fourth surface (36) of said second body (20) is smooth, and the second surface (35) of said core (24) is provided with ribs (46), which separate said return junction channels (38) from each other in a circumferential direction.

3. The electric machine rotor according to any one of the preceding claims, wherein said delivery junction channels (44) and/or said return junction channels (38) radiate out from said longitudinal axis (3).

4. The electric machine rotor according to any one of the preceding claims, wherein
- the second surface (42) of said first body and the first surface (43) of said core (24) have curved profiles matching to each other; and/or
- the fourth surface (36) of said second body and the second surface (35) of said core (24) have curved profiles matching to each other.

5. The electric machine rotor according to any one of the preceding claims, wherein said first body is defined by an insert (41), which is at least partially housed in said second shaft portion (5) coaxially with said core (24).

6. The electric machine rotor according to claim 5, wherein said core (24) and/or said insert (41) comprise a plastic material.

7. The electric machine rotor according to claim 5 or 6, wherein said core (24) and/or said insert (41) are configured in such a way that they can be manufactured by a moulding technique.

8. The electric machine rotor according to any one of the preceding claims, wherein said inner cavity (23) is axially bounded by a first flange (14), and wherein said fourth surface (36) joins an inner face (16) of said first flange (14) to an inner cylindrical surface of said first shaft portion (4).

9. The electric machine rotor according to claim 8, wherein said second body (20) is a metal body comprising said first flange (14) and said first shaft portion (4).

10. The electric machine rotor according to any one of the preceding claims, wherein said inner cavity (23) is axially bounded by a second flange (15), and wherein said second flange (15), said annular wall (10) and said second shaft portion (5) define parts of a further metal body (22).

11. The electric machine rotor according to any one of the preceding claims, wherein said supply hole (45) is made centrally along said longitudinal axis (3) and, in correspondence with said delivery junction channels (44), is engaged by fins (55) so as to be split into a plurality of axial channels (56) parallel to each other.

12. The electric machine rotor according to claim 11, wherein said fins (55) define part of said core (24).

13. The electric machine rotor according to any one of the preceding claims, wherein said core (24) defines part of a further insert (32), axially ending with a shank (33) housed in said first shaft portion (4); and wherein said return junction channels (38) communicate with said outlet (8) through a gap (39) radially defined by an inner cylindrical surface of said first shaft portion (4).

14. The electric machine rotor according to claim 13, wherein said gap (39) is split, in a circumferential direction, into a plurality of return channels (40) parallel to each other.

15. The electric machine rotor according to claim 13 or 14, wherein said first shaft portion (4) is engaged by an interface element, which is coaxial to said shank (33) and has an axial hole defining said inlet (7); said outlet (8) being defined between said interface element and the inner cylindrical surface of said first shaft portion (4).
